# EUROPEAN PATENT APPLICATION

(11) **EP 1 347 582 A2**
(43) Date of publication of application: **24.09.2003**
(21) Application number: 03250779.0
(22) Date of filing: 07.02.2003
(51) Int. Cl.: H04B 1/59

(54) **Low power transponder circuit**

(30) Priority: 27.02.2002 US 90415
(71) Applicant: ZARLINK SEMICONDUCTOR (U.S.) INC., San Diego, CA 92127 (US)
(72) Inventor: Ming Liu, Mike, San Diego, CA 92129 (US)
(74) Representative: W.P. Thompson & Co.

(57) **Abstract**

A low power transponder circuit comprises two comparator (62, 104 ; 64, 106) coupled to a signal input section, wherein only a first comparator (62, 104) is active before a valid wake-up signal is detected and validated. The first comparator (62,104) consumes less power than the second comparator (64, 106), and the second comparator (64, 106) operates at a higher speed than the first comparator (62, 104), such that valid received signal processing is performed on a signal from the second, higher speed comparator (64, 106). Reference voltage levels for the two comparators can also be modified during circuit operation with either information stored in the transponder or by data received in a valid received signal.

## Description

### Background of the Invention

### Field of the Invention

The present invention relates to signal detection Systems, and more particularly to low power radio frequency transponder circuits.

### Description of the Related Art

Transponders are electronic circuits which are typically configured to receive a radio frequency (RF) signal, sometimes referred to as an interrogation signal, and in response to the received signal the transponder transmits a specific RF signal, for example, containing an identity code, or retransmits the received signal.

The majority of transponder applications typically include a battery powered system, therefore it is advantageous for the system to conserve power to prolong the life of the battery source. To conserve power, a portion of the system can be turned off or switched to a lower power mode while not in use. There are many methods known in the art to perform such a function.

A common solution to high power consumption in transponder circuits is to implement a wake-up circuit with discrete components and a controller. The controller accepts commands from a radio frequency (RF) reader via a front-end comparator to validate an incoming signal and "wake-up" the system. The comparator compares the incoming RF signal strength to a set reference voltage, and only notifies the system when a signal stronger than the reference voltage has been received. When the comparator has validated the "wake-up" command, the controller then puts the system into an active mode of operation. A portion of the transponder circuit can therefore conserve power during a non-operational mode while a wake-up circuit verifies received RF signals.

A transponder wake-up system is described in U.S. Patent No. 5,621,412 to Sharpe, et al. entitled "Multi-stage Transponder Wake-up, Method and Structure." Sharpe discloses a system and method wherein a transponder is enabled or awakened in multiple stages. A first stage comprises a threshold detector to measure the power level of a received RF signal. If the RF energy exceeds a pre-determined level, then the transponder employs a modulation detector. If a predetermined modulation is detected by the modulation detector, the transponder is then fully activated to its normal operational state. Similar to the comparator validation described above, Sharpe's threshold detector can only consume as little power allowed by the lowest operating speed of the detector for effective receive signal processing.

An improved low power transponder circuit would therefore be beneficial in the art.

### Summary of the Invention

A transponder circuit comprises an input signal section coupled to both a first and a second comparator. The first comparator can be configured to consume less power than the second comparator, and the second comparator can operate at a higher speed than the first comparator. The circuit can be configured such that the second comparator is only enabled when a predefined signal is detected at the first comparator.

The transponder circuit can further comprise validation circuitry configured to validate the input signal in response to a signal from the first comparator. The second comparator may only be active when the validation circuitry validates the input signal.

The transponder circuit can be configured such that valid receive signal processing is only performed on a signal produced by the second comparator. The second comparator can be turned off when a voltage level of the input signal is below a voltage level of a reference voltage signal received at the second comparator.

A method of reducing power consumption in a transponder circuit comprises activating a first comparator prior to receiving a predefined signal validation, and activating a second comparator in response to an output from the first comparator. The first comparator can be configured to consume less power than the second comparator, and the second comparator can operate at a higher speed than the first comparator.

The method may further comprise performing transponder signal processing only on a signal produced by the second comparator.

A method of operating a transponder circuit comprises routing an input signal to a first comparator which is enabled and a second comparator which is disabled, and enabling the second comparator in response to a signal output by the first comparator. The method may further comprise operating the second comparator only after a predefined signal received at the first comparator has been validated. The first comparator can be configured to consume less power than the second comparator. The method may additionally comprise performing transponder receive signal processing only on a signal received by the second comparator.

The method of operating a transponder circuit may further comprise activating an oscillator upon detection of a signal at the first comparator, driving a signal validation circuit with a signal from the oscillator, validating the predefined signal from the first comparator at the validation circuit, and activating additional transponder circuit components following signal validation. The method may further comprise adjusting a reference voltage for the first comparator and a reference voltage for the second comparator in response to information received from the input signal.
The invention is described further hereinafter, by way of example only, with reference to the accompanying drawings, in which:-

Figure 1 is a block diagram of one embodiment of a transponder circuit in accordance with the present invention.

Figure 2 is a flowchart illustrating the operation of the transponder circuit of Figure 1.

Figure 3 is a detailed block diagram of one embodiment of a transponder circuit.

Figure 4 is a flowchart illustrating the operation of the transponder circuit of Figure 3.

### Detailed Description of the Preferred Embodiment

Embodiments of the invention will now be described with reference to the accompanying Figures, wherein like numerals refer to like elements throughout. The terminology used in the description presented herein is not intended to be interpreted in any limited or restrictive manner, simply because it is being utilized in conjunction with a detailed description of certain specific embodiments of the invention. Furthermore, embodiments of the invention may include several novel features, no single one of which is solely responsible for its desirable attributes or which is essential to practicing the inventions herein described.

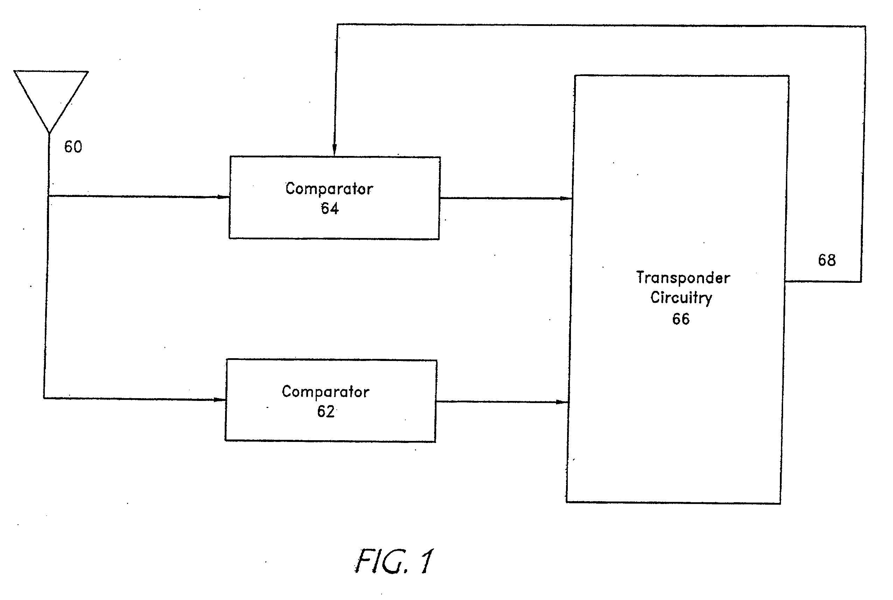

Figure 1 illustrates one embodiment of a transponder circuit 50 incorporating aspects of the invention. The transponder circuit 50 comprises an antenna 60 for receiving signals, and the antenna is coupled to a first comparator 62 and a second comparator 64. The first comparator preferably operates at a slower speed and consumes less power than the second comparator 64. It will be appreciated that although the comparators 62, 64 are shown as directly connected to the antenna 60, the comparators 62, 64 may be coupled to the antenna 60 through various useful components, such as filters. Transponder circuitry 66 is receivably connected to both the first and second comparators 62, 64, and may be configured to provide detection signal validation, valid received signal processing functions, and signal transmission functions. The transponder circuitry 66 provides an active enable output 68, so as to enable the second comparator 62 to process signals received from the antenna 60.

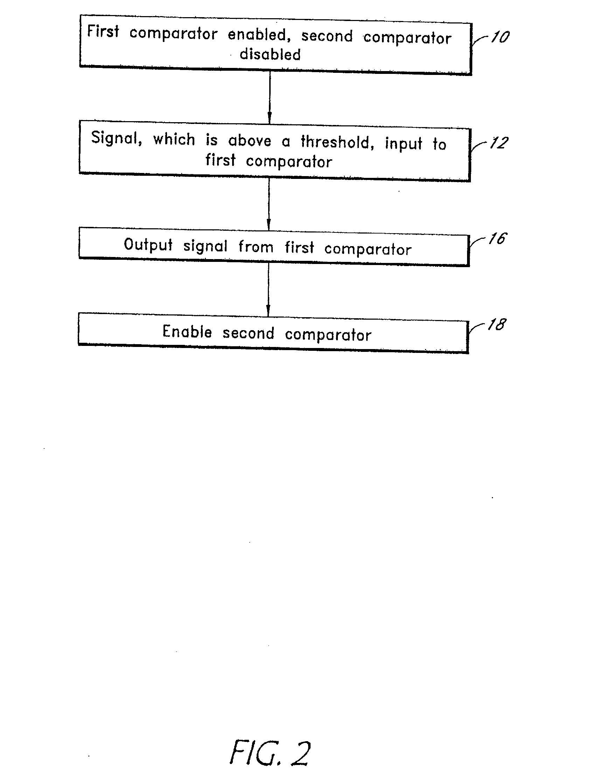

Figure 2 illustrates the operation of the transponder circuit of Figure 1. In a step 10, the first comparator 62 is enabled and the second comparator 64 is disabled. In a step 12, a signal is detected at the first comparator 62 which is above a threshold, and in a step 16, a signal is generated in response to the detected signal. In a step 18, the second comparator is enabled in response to the output signal from the first comparator.

More specifically, the first comparator 62 is enabled to receive signals from the antenna 60, whereas the second comparator 64 and portions of the transponder circuitry 66 are turned on only when a wake-up signal is detected by the first comparator 62. Upon receiving a signal from the antenna 60, the output of the first comparator is asserted if the signal level is above a threshold value, and transmits an output signal to the transponder circuitry 66. As explained further below, in some embodiments, the transponder circuitry 66 may authenticate the detected signal as being valid or invalid.

When a wake-up signal is detected, the transponder circuitry 66 provides the active enable signal to the second comparator 64, and turns on appropriate components in the transponder circuitry 66. The transponder circuitry 66 then receives signals from the antenna 60 via the second comparator 64 until the received signal level falls below a reference voltage at the second comparator 64.

The use of a single comparator configuration in a front-end of a transponder circuit limits the circuit to a comparator which operates at a high enough speed for receive signal processing, and the amount of power consumed by the comparator is dependent on the speed of the comparator. Therefore the amount of power consumed by the wake-up detection circuitry of a single comparator transponder can only be as low as allowed by the lowest operating speed of the comparator for effective receive signal processing.

The use of two separate comparators 62, 64 in a front end of the transponder circuit, however, allows for low power consumption in an idle mode when the low power idle comparator 62 is active to detect a wake-up signal. Also, implementing the second comparator 64 allows the circuit 66 to process received signals via the faster speed active comparator 64, rather than processing signals from the low speed comparator 62. When the received signal level falls below the reference voltage at the second comparator 64, the transponder circuitry 66 is turned off and only the first comparator 62 is active.

Therefore, in an idle mode, the transponder circuit 66 consumes very little power by operating only the low speed, low power idle comparator 62, and ensures accurate receive signal processing by processing a signal received through the high speed active comparator 64 in an active mode.

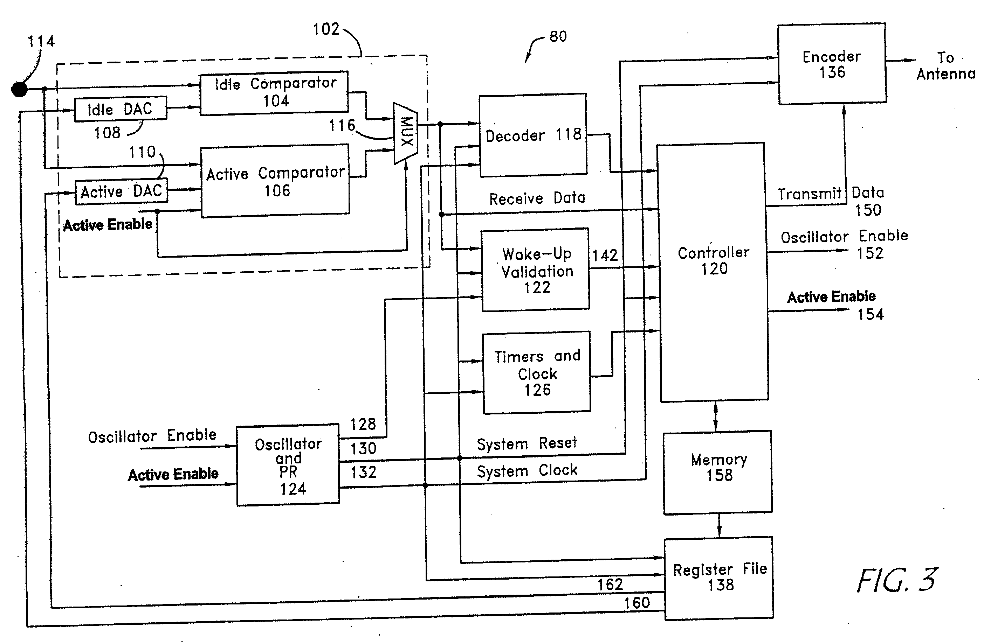

Figure 3 is a block diagram of one specific embodiment of a transponder circuit 80. The transponder circuit 80 comprises a front-end analog circuit 102 having a first comparator 104, referred to herein as the idle comparator, and a second comparator 106, referred to herein as the active comparator. The idle comparator 104 is preferably low speed and consumes a small amount of power such that battery drain is minimized when the idle comparator 104 is enabled. As described above, however, the active comparator 106 can be designed for high speed operation, which requires more power, and only enabled when the system has validated an input wake-up signal detected at the idle comparator 104. The front end circuit 102 further comprises a first digital to analog converter (DAC) 108 having an output coupled to the idle comparator 104, and a second DAC 110 having an output coupled to the active comparator 106. The first and second DAC's 108, 110 provide reference voltages for the idle and active comparators 104, 106, respectively. The active comparator 106 also receives an active enable signal, discussed further hereafter, wherein the active comparator 106 is only activated when the active enable signal is asserted.

The front end circuit 102 receives input signals at an input signal section 114, which is coupled to an input of both the idle comparator 104 and the active comparator 106. The input signal section 114 can comprise an antenna, and the comparators 104, 106 can be coupled to the input signal section 114 through various useful components. The outputs of the idle comparator 104 and the active comparator 106 are connected to a multiplexer 116, which also receives the active enable signal. An output of the multiplexer 116 is the output of the front-end circuit 102, and the multiplexer can switch the output of the front-end circuit between a signal received from the idle comparator 104 and a signal received from the active comparator 106 depending on the status of the active enable signal. The output of the front-end circuit 102 is coupled to a decoder 118, a controller 120, and a wake-up validation block 122. The decoder 118 provides a signal decode function for a validated input signal, and can transmit a decoded input signal to the controller 120.

The oscillator and power-reset (PR) block 124 provides a reset signal and a clock signal for the transponder circuit 80 via a system reset output 130 and a system clock output 132, respectively. The system reset output 130 can reset all of the system blocks outside the front end circuit 102, and is coupled to the decoder 118, the wake-up validation block 122, the controller 120, the timers and clock block 126, an encoder 136, and a register file 138. The system clock output 132 is coupled to the decoder 118, the timers and clock block 126, the encoder 136, and the register file 138. The timers and clock block 126 has an output coupled to the controller 120 so as to provide the controller 120 with appropriate clock timing. The oscillator and PR block 124 also has a trigger clock output 128, which is coupled to the wake-up validation block 122, so as to provide a clock for validating a wake-up signal in response to an output signal from the idle comparator 104.

The wake-up validation block 122 is configured to validate a detected signal from the idle comparator 104. The validation block 122 can be configured to monitor a detected signal from the idle comparator 104 for a continuous and uninterrupted signal having a predefined time duration. Such a validation scheme can use, for example, counters to determine the duration of the detected signal utilizing the trigger clock output 128 from the oscillator and PR block 124 to operate the counters. If such a signal is detected at the validation block 122, then the wake-up signal is deemed validated. The wake-up validation block 122 has a valid trigger output 142 which is coupled to the controller 120 so as to provide the controller with a trigger signal when a detected signal from the idle comparator 104, via the multiplexer 116, has been validated.

The controller 120 has a transmit data output 150, an oscillator enable output 152, and an active enable output 154. The oscillator enable output 152 is coupled to the oscillator and PR block 124 so as to enable the oscillator and PR block 124 when a detected signal is received from the idle comparator 104, via the multiplexer 116. The active enable output 154 provides the active enable signal, discussed above, and is coupled to the oscillator and PR block 124 and the active comparator 106 so as to enable the oscillator and PR block 124 to provide the system clock, and to enable the active comparator 106 to produce an output in response to received input signals. The transmit data output 150 is coupled to the encoder 136 and can provide the encoder 136 with data to be transmitted.

In some embodiments, the controller 120 can have two-way communication with a memory block 158, which is coupled to the register file 138. The register file 138 has a first output 160 coupled to the first DAC 108, and a second output 162 coupled to the second DAC 110. The register file 138 adjusts the output signals of the first and second DAC's 108, 110 with these digital output signals so as to modify the reference voltages for the active and idle comparators 104, 106, respectively. The reference voltage signal levels can be the same for both comparators 104, 106, or different. In some embodiments the active comparator 106 reference voltage is higher than the reference voltage of the idle comparator 104. The register file 138 can store values for configuring the reference voltage signals for the comparators 104, 106, or use information from the memory block 158. The memory block 158 can also store information such as system data and identification.

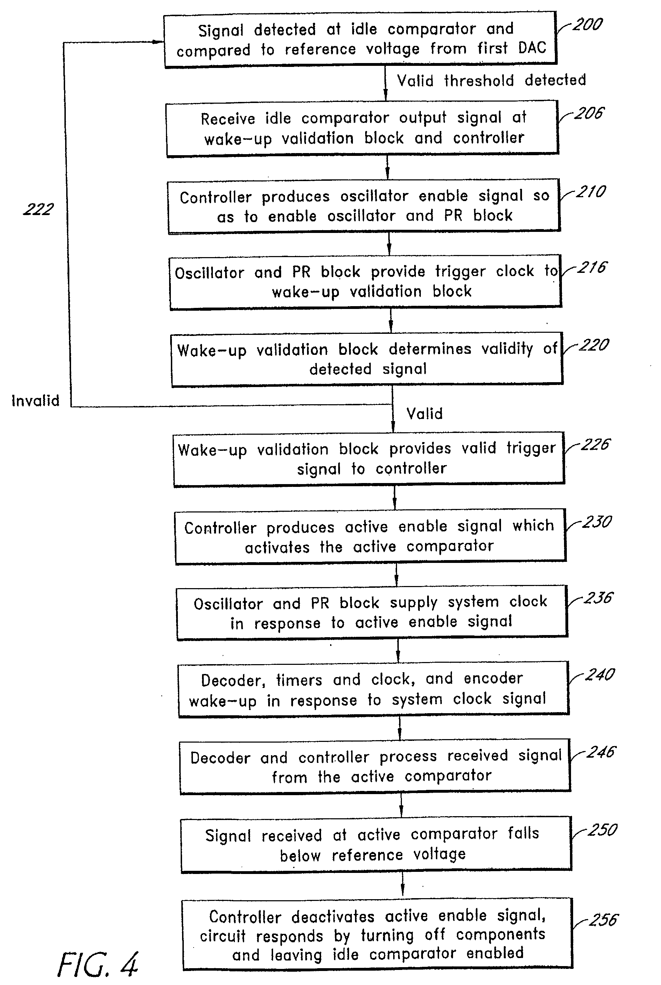

Figure 4 is a flowchart illustrating a method of operation of the transponder circuit 80 of Figure 3. In the process illustrated in Figure 4, the system begins in an idle mode, wherein the idle comparator 104 is on. In a step 200, a signal is detected at the idle comparator 104 and compared to the reference voltage provided by the first DAC 108. If the idle comparator 104 output is asserted because the detected signal has a higher voltage level than the reference voltage provided by the first DAC 108, then this asserted output of the idle comparator 104 is received by the wake-up validation block 122 and the controller 120 via the multiplexer 116 in a step 206. At a step 210, in response to this output, the controller produces the oscillator enable signal so as to enable the portion of the oscillator and PR block 124 that produces trigger clock signal 128. In a step 216, the oscillator and PR block 124 provides the trigger clock signal 128 to the wake-up validation block 122.

In a step 220, the wake-up validation block 122 uses the trigger clock signal to validate the detected signal from the multiplexer 116 using, for example, a plurality of counters as previously discussed. If the wake-up validation block 122 determines that the detected signal is invalid, then, in a step 222, the system returns to step 200. If the detected signal is determined to be valid, then the wake-up validation block 122 provides a valid trigger signal to the controller 120 in a step 226. In a step 230, the remaining controller circuitry is enabled and the controller produces an active enable signal, thereby activating the active comparator 106. In a step 236, the oscillator and PR block 124 provide the system clock signal in response to the active enable signal from the controller 120. In a step 240, the decoder 118, the timers and clock block 126, and the encoder 136 wake-up in response to the system clock signal. In a step 246, the decoder 118 and controller 120 can process a valid received signal from the active comparator 106. The method of operation of the transponder circuit 80 may also include, following step 246, the controller 120 providing the encoder 136 with data to be transmitted, encoding of the data by the encoder 136, and transmission of the encoded data.

When the received signal level is below the reference voltage received from the second DAC 110 in a step 250 such that the active comparator is no longer producing an output signal, the controller 120 responds by deactivating the active enable output 154, which turns off the active comparator and additional portions of the transponder circuit 80, leaving the idle comparator 104 enabled in a step 256.

An additional operation of the transponder circuit 80 can include setting, or programming the reference voltage levels for the idle and active comparators 104, 106. The reference voltage levels can be programmed by the register file 138 and the controller 120 using the first and second DAC's 108, 110, such that the voltage levels can be adjusted in response to information received by the transponder circuit 80 during circuit operation. The register file 138 can store preset reference voltage values, can retrieve reference voltage values from the memory 158, or can transmit values provided by the controller 120 in response to data received by the transponder circuit 80.

The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A transponder circuit comprising an input signal section coupled to both a first (62; 104) and a second comparator (64; 106).

2. A circuit according to claim 1, wherein said first comparator (62; 104) consumes less power than said second comparator (64; 106).

3. A circuit according to claim 1 or 2, wherein said second comparator (64; 106) operates at a higher speed than said first comparator (62; 104).

4. A circuit according to claim 1,2 or 3, wherein said second comparator (64; 106) is only enabled when a predefined signal is detected at said first comparator (62; 104).

5. A circuit according to claim 1, 2, 3 or 4, wherein a reference voltage for said first comparator (62; 104) is adjustable during circuit operation.

6. A circuit according to any of claims 1 to 5, wherein a reference voltage for said second comparator (64; 106) is adjustable during circuit operation.

7. A circuit according to any of claims 1 to 6, further comprising validation circuitry (122) configured to validate said input signal in response to a signal from said first comparator (62; 104).

8. A circuit according to claim 7, wherein said second comparator (64; 106) is only active when said validation circuitry (122) validates said input signal.

9. A circuit according to any of claims 1 to 8, wherein valid receive signal processing is only performed on a signal produced by said second comparator (64; 106).

10. A circuit according to claim 1, wherein said second comparator (64; 106) turns off when a voltage level of said input signal is below a voltage level of a reference voltage signal received at said second comparator (64; 106).

11. A method or reducing power consumption in a transponder circuit, comprising activating a first comparator (62; 104) prior to receiving a predefined signal, and activating a second comparator (64; 106) in response to an output from said first comparator (62; 104).

12. A method according to claim 11, wherein said first comparator (62; 104) consumes less power than said second comparator (64; 106).

13. A method according to claim 11 or 12, wherein said second comparator (64; 106) operates at a higher speed than said first comparator (62; 104).

14. A method according to claim 11, 12 or 13, further comprising performing transponder signal processing only on a signal produced by said second comparator (64; 106).

15. A method of operating a transponder circuit, comprising routing an input signal to a first comparator (62; 104) which is enabled and a second comparator (64; 106) which is disabled, and enabling said second comparator (64; 106) in response to a signal output by said first comparator (62; 104).

16. A method according to claim 15, further comprising operating said second comparator (64; 106) only after a predefined signal received at said first comparator (62; 104) has been validated.

17. A method according to claim 15 or 16, wherein said first comparator (62; 104) consumes less power than said second comparator (64; 106).

18. A method according to claim 15, 16 or 17 wherein a reference voltage for said first comparator (62; 104) is equal to a reference voltage for said second comparator (64; 106).

19. A method according to any of claims 15 to 18, further comprising performing transponder receive signal processing only on a signal received by said second comparator (64; 106).

20. A method according to any of claims 15 to 19, further comprising activating an oscillator (124) upon detection of a signal at said first comparator (62; 104), driving a signal validation circuit (122) with a signal from said oscillator (124), validating said predefined signal from said first comparator (62; 104) at said validation circuit (122), and activating additional transponder circuit components following signal validation.

21. A method according to any of claims 15 to 20, further comprising adjusting a reference voltage for said first comparator (62; 104) and a reference voltage for said second comparator (64; 106) in response to information received from said input signal.

22. A transponder circuit comprising:
an input terminal (114);
a first comparator (104), coupled to said input terminal (114);
a second comparator (106), coupled to said input terminal (114);
control circuitry, coupled to said first comparator (104) and said second comparator (106), configured to control the operation of said second comparator (106) by determining a validity status of a signal received from said first comparator.

23. A circuit according to claim 21, wherein said first comparator (104) consumes less power than said second comparator (106).

24. A circuit according to claim 21, wherein said second comparator (106) operates at a higher speed than said first comparator (104).

25. A method of making a transponder circuit, comprising coupling an antenna (60) to two separate comparators (62; 64).

26. A method according to claim 25, wherein one of said two separate comparators (62; 64) consumes less power than the other.

27. A method according to claim 25 or 26, further comprising coupling an enable input of one of said comparators (62; 64) to a controller (120) in the transponder circuit.
